# EUROPEAN PATENT APPLICATION

(11) **EP 1 491 398 A1**
(43) Date of publication of application: **29.12.2004**
(21) Application number: 04253800.9
(22) Date of filing: 25.06.2004
(51) Int. Cl.: B60P 3/22

(54) **Hatch Cover Apparatus**

(30) Priority: 25.06.2003 GB 0314745
(71) Applicant: Weatherhead, John Franklin, King's Lynn, Norfolk PE31 6BG (GB); Titchener, Richard George, Spalding, Lincolnshire PE12 9RQ (GB)
(72) Inventor: Weatherhead, John Franklin, King's Lynn, Norfolk PE31 6BG (GB); Titchener, Richard George, Spalding, Lincolnshire PE12 9RQ (GB)
(74) Representative: Pols, Ronald Maarten

(57) **Abstract**

A hatch cover apparatus 400 comprising a cover lid 402 adapted to cover an opening 404 formed by the body of a storage container 406. The apparatus 400 comprises an expandable seal which extends between the closed cover 402 and the container body 406 to thereby seal the opening 404, and an arrangement 408 for retaining the cover lid in a closed position when the seal is expanded. The apparatus 400 further comprises means for providing sliding movement of the cover lid 402 relative to the opening 404 between an open position and a closed position.

## Description

The present invention relates to a hatch cover apparatus, and particularly, but not exclusively to a hatch cover apparatus for covering an opening in a storage container such as a vehicle tank.

Tank trucks used for transporting bulk products typically include a tank in the form of one or more storage containers. The bulk product is loaded into the respective containers through one or more hatches provided in the top of the container which must be opened and closed before and after filling. A conventional hatch includes a cover lid, which is pivotally mounted to the container and secured in a closed position over a fill opening of the container by hold down bolts or T-clamps.

The cover typically includes a plurality of taps or ears which are engaged by the respective hold down bolts to close and seal the cover over the fill opening. To open the hatch, each hold down bolt must be loosened and then disengaged from the tap. In a like manner, when the hatch is closed, each hold down bolt must be repositioned to engage a respective tap and tightened down to assure an effective seal between the cover and the container. Most hatches include at least one hold down bolt.

The process of opening and closing a conventional hatch is time consuming. In addition, the driver of the truck or operator must access the top of the container to reach the hatch to unlock and open the hatch before filling the container, and then subsequently re-scale the side of the truck or container to close and lock the hatch once the filling process has been completed. When scaling the truck or container to open the hatch cover lid, the driver or operator can be exposed to hazardous materials which are stored inside the container, and this poses serious health and safety risks.

To overcome the above described problems, automated hatches have been developed which enable the hatch to be opened and closed from the cabin or at ground level, so that bulk material can be loaded into the tank through the opening quickly and without the risks associated with manual opening and closing of the hatch cover. However, these automated hatches have the disadvantage that the construction is complicated and therefore expensive to manufacture.

Also, known automated hatches increase the overall height of the tank when compared to a conventional tank with manually operated hatch covers. This is undesirable, since tanks for trucks are usually of a height which is close to the legal height limit so as to maximise the volume of the tank. Often, operator height restrictions exist which limit the height of the tank. Known automated hatches are therefore unsuitable to be retrofitted to existing conventional tanks as the overall height of a conventional tank fitted with a known automated hatch would exceed the legal height of the tank, or would exceed the operator's height limits.

It is an object of the present invention to provide improvements in relation to one or matters discussed; and/or to provide improvements generally.

According to an aspect of the invention, there is provided an automatic hatch cover apparatus for a storage container comprising:
a cover lid adapted to cover an opening formed by the body of a storage container,
an arrangement for sliding the cover lid relative to the opening between an open position and a closed position,
an arrangement for retaining the cover lid in a closed position,
sealing means extending between the closed cover and the container body to thereby seal the opening, whereby the sealing means are activatable in a sealing condition to seal the opening in which the retaining arrangement retains the cover lid in a closed position, and a non-sealing condition to release the cover lid in which the cover lid is slidable between the open position and the closed position to uncover and cover the opening.

There is thus provided a hatch cover apparatus of a simple construction which, due to the sliding movement of the cover lid relative to the opening, minimises the overall additional height of the tank. The hatch cover apparatus is therefore suitable to be retro-fitted to existing tank and hatch arrangements as well as being suitable for newly manufactured tanks.

According to another aspect of the invention there is provided an improved hatch cover apparatus comprising a cover lid adapted to cover an opening formed by the body of a storage container, an arrangement for providing sliding movement of the cover lid relative to the opening between an open position and a closed position; an expandable seal which is adapted to extend between the closed cover and the container body thereby sealing the opening, and an arrangement for retaining the cover in a closed position, when the seal is expanded.

The cover lid is slideable in relation to the opening to open and close the opening. Whilst the cover lid moves or slides, the lid remains in the same plane of movement. This plane of movement is approximately parallel to the plane of the opening or the plane of the opening perimeter. The cover lid may be moved approximately longitudinally in relation to the opening. The cover lid may also be rotated or swivelled in relation to the opening. The retaining arrangement is configured to allow such movements.

In one embodiment of the invention, the sealing means comprises an expandable seal. Preferably, the seal is inflatable.

In another embodiment, the sealing means comprises means for providing a vacuum pressure inside the container to seal the opening. In this embodiment, the sealing means may further comprise a seal which is provided between the opening and the lid.

The container may also comprise means for providing an internal pressure inside the container which causes sealing off of the opening. In that case, the sealing means comprise an internal pressure means inside the container for sealing the opening. The internal pressure may be lower than the pressure outside the container which causes the cover lid to be compressed onto the opening to seal the opening. Alternatively, the internal pressure may be higher than the pressure outside the container which causes the seal to expand and seal off the opening between the cover lid and the container whilst the cover lid is retained over the opening.

In an advantageous embodiment of the invention, the retaining arrangement may comprise at least one guide member mounted on the container body, the retaining arrangement further comprising a frame for engaging with the guide member, the cover being connected to the frame. The frame enables the cover lid to be slideable in relation to the guide member. In addition, the cover lid is prevented from moving away from the opening in the closed, sealed position as the frame engages with the guide member which is mounted on the container body.

In an advantageous embodiment, the cover lid is swivelled in relation to the opening whereby the lid remains in the same plane of movement in relation to the opening. The lid may be pivotally mounted on the container body to enable the swivelling movement. The lid may be supported on a suitable support during opening and closing. In this embodiment, there is no guide member, nor a frame to enable the movement of the lid in relation to the opening. This results in a simple and compact construction.

In a preferred embodiment, the cover lid is pivotally connected to the frame. This allows the cover lid to be opened in a conventional way by pivoting. This may be necessary for maintenance or inspection purposes.

In another embodiment of the invention, the retaining arrangement comprises first and second securing means for securing the cover in a closed position.

The first securing means may comprise at least one first securing member mounted on the container body and at least one second securing member provided on the cover lid, the first securing member engaging with the second securing member.

In another embodiment, the first securing member comprises a first clamp member, the first clamp member being adapted to engage with the second securing member, the second securing member being formed by at least part of the cover lid. The first clamp member is adapted to engage with the cover lid in a closed position to retain the cover lid in its closed position. When the seal is activated, the cover lid is retained in its closed position over the opening in the container whilst the seal seals the gap between the opening perimeter or neck and the cover lid. The first clamp member thus prevents the cover lid from moving away from its closed position when the seal is activated.

The first clamp member may comprise a first clamping surface which engages with the cover lid. The cover lid may be in the form of a conventional cover whereby the cover lid comprises taps or ears for engaging with the clamp members. The taps or ears are formed to engage with a conventional clamp member in the form of a T-clamp or bolt as discussed above. The cover lid may still be manually screwed down to cover the opening if desired or required for example in case of malfunction of parts of the hatch cover apparatus.

In an alternative embodiment, the second securing member comprises a protrusion or lug and the first securing member comprises an aperture or locating opening for receiving the protrusion, or lug.

In a further embodiment, the second securing means comprises at least one third securing member mounted on the container body and at least one fourth securing member provided on the cover lid, the third securing member engaging with the fourth securing member.

The third securing member may comprise a second clamp member, the second clamp member being adapted to engage with the fourth securing member, the fourth securing member being formed by at least part of the cover lid.

In an alternative embodiment, the fourth securing member comprises a protrusion and the third securing member comprises an aperture for receiving the protrusion.

The securing means are at least partially removable to facilitate conventional opening of the cover lid for maintenance, inspection or cleaning purposes. Preferably the apparatus may comprise four clamp members but more or less clamp members may be provided.

In a further embodiment, the retaining arrangement comprises a guide member which is mounted on the container body, the retaining member further comprising a first member for engaging with the guide member, the cover lid being connected to the first engagement member. The guide member preferably comprises a track or tube, the first engagement member engaging with the track or tube. The first engagement member may be configured such that the first engagement member is only movable in a direction along the guide member. Preferably, the first engagement member at least partially encloses the guide member. The first engagement member is preferably slidably arranged along the guide member.

In a preferred embodiment, the cover lid is pivotally connected to the first engagement member. This allows pivotal opening of the cover lid in case of failure of the hatch cover apparatus. To facilitate pivotal opening of the cover lid, the securing means are at least partially removable. In addition, the first engagement member may be removable.

In a further embodiment, the first guide engagement member comprises the second clamp member for clamping the cover in the closed position. The cover lid is preferably movable relative to the first and second clamp members in a direction which is approximately perpendicular to the direction of sliding movement of the cover. As the seal extends between the closed cover and the container body, the cover is pushed upwards against the clamp members when the seal is activated thereby effectively sealing off the opening.

The clamp members are preferably removable. This allows the cover to be removed from the hatch cover apparatus for cleaning, inspection or repairs. Also, the removable clamp members allow the cover to be opened by pivoting in the conventional way.

The expandable seal is inflatable and is provided in the cover lid. Preferably, the seal engages with the neck of the container which is provided around the opening. The neck may be an existing part of a conventional tank. The expandable seal may also be provided in the container. Alternatively, the seal may be provided in the neck of the container and seal against the lid.

In an embodiment, the arrangement for sliding the cover lid comprises an extension member. The extension member may be extendable between a retracted position corresponding to the open position of the cover and an extended position corresponding to the cover lid being in a closed position. Alternatively, the extended position may correspond to the cover lid in an open position and the retracted position may correspond to the cover lid in a closed position. The arrangement for providing sliding movement may comprise further guide means, cables, pulleys and other equipment for providing sliding movement of the cover lid relative to the opening.

The extension member preferably comprises a hydraulic or pneumatic cylinder. The extension member may also be electrically operated. The cylinder may be operated by the pneumatic and/or hydraulic and/or electric system of the vehicle or alternatively, an auxiliary system may be provided to provide compressed air or a pressurized operating fluid or electricity to operate the hatch cover apparatus.

The extension member may be connected to the frame and the container body to slide the cover lid in relation to the opening. In another embodiment, the extension member may be connected to the cover lid and the container body.

In a further embodiment, the cover lid is pivotally mounted to the frame. Upon retraction of the extension member the cover lid moves free from the retaining arrangement and pivots in relation to the frame. Conversely, upon extending the extension member, the cover lid pivots back to its position in which it is in an approximately parallel plane to the opening and the lid slides over the opening. The lid is then retained in the closed position by the retaining arrangement. The guide member may comprise a reduced length to facilitate the hinged opening of the cover lid so that, when the cover lid reaches the end of the guide member, the continued retraction of the extension member causes the lid to pivot. Conversely, extension of the extension member causes the lid to pivot back into a position in which the lid is approximately parallel to the opening and continued extension of the extension member slides the lid over the opening to close the opening.

In a preferred embodiment, the extension member is connected to the cover lid such that the extension member is arranged over the cover lid. In this way, the space required for the extension member is minimised. This is advantageous if space for the hatch cover apparatus is limited.

The hatch cover apparatus as herein before described may be retrofitted to existing tank and cover lid arrangements. This has the advantage that existing tank trucks can be fitted with this system at a minimal cost. As the hatch cover apparatus is of a simple construction, the number of parts which is required to implement the system is as small as possible to reduce the overall costs of the system. Importantly, the hatch cover lid and neck ring which surround the opening of the tank are utilised where possible. The activating means, guide members and securing members are all fitted to the existing tank and hatch lid cover arrangement to form the hatch cover apparatus.

In a further embodiment, the hatch cover apparatus comprises activating means for activating the seal and the extension member. The activating means is electrically and/or hydraulically and/or pneumatically operated. The seal and the extension member are also hydraulically or pneumatically operated. This has the important advantage that the apparatus is operated by a single activating means. This provides a very simple construction whereby separate activating means in the form of electric motors to open and close the lid and to control the securing or locking of the cover lid and additional activating means for sealing the opening are avoided. The construction of the hatch cover apparatus is thus very simple. This reduces the overall cost and the operating cost of the apparatus. In addition, as the construction is less complicated than conventional automated cover apparatus, the hatch cover apparatus of the invention is less prone to failure.

In an embodiment, the hatch cover apparatus comprises control means for controlling operation of the apparatus.

The control means may comprise a display for displaying the status or position of the cover lid. In a preferred embodiment, the control means comprises a control panel which comprises a display and control buttons for operating the hatch cover apparatus. The control panel may comprise a security lock to prevent unauthorised use of the cover apparatus. The security lock may be configured such that the operator keys in a security code before the apparatus is activatable to prevent unauthorised operation of the apparatus. Alternatively, the security lock may comprise a conventional padlock for example. This arrangement has the important advantage that it is no longer necessary to physically tag or otherwise seal the hatch covers which is currently a common practice when foodstuffs, such as flour and sugar, are transported.

In a further embodiment, the control means is connected to the vehicle ignition switch. This serves as a further security measure to prevent unauthorised operation of the hatch cover apparatus. The apparatus may further comprise sensors to sense the operation and status of the hatch cover apparatus. Such sensors may comprise switches for detecting opening and/or closing of the hatch cover. In addition, the hatch cover apparatus may comprise a camera system which is provided in the vicinity of the hatch covers and which helps the driver of a truck to position the hatch cover in relation to loading and unloading devices such as silos.

In a further embodiment, there is provided a tank comprising a hatch cover apparatus as herein before described. Such a tank may be in the form of a silo, or other storage container which comprises a hatch cover. It is evident that the apparatus as herein before described is not only suitable for use on tank trucks but may also be used in storage containers that may be provided on ships, factories, farmyards and other locations where storage facilities are present.

According to a further aspect of the invention, there is provided a method of operating an automatic hatch cover apparatus comprising:
providing a cover lid adapted to cover an opening formed by the body of a storage container,
providing an arrangement for sliding the cover lid relative to the opening between an open position and a closed position,
providing an arrangement for retaining the cover lid in a closed position,
providing sealing means extending between the closed cover and the container body to thereby seal off the opening, the sealing means being activatable in a sealing condition to seal off the opening whereby the cover lid is retained in a closed position, and a non-sealing condition for sliding the cover lid between the open position and the closed position to uncover and cover the opening,
the method further comprising; to close the opening:
sliding the cover over the opening followed by sealing the opening, and; to open the opening:
   unsealing the opening followed by sliding the cover away from the opening.

The hatch cover apparatus as herein described has several important advantages. The apparatus obviates the need for operators to access the top of the tank thus reducing accidents. In addition, as the hatch covers are operated from a common control means, this provides security and prevents unauthorised access to the goods that are stored in the tank. This also obviates the need for TIR cables (Transport International Routiers) or security tags on top of the tank.

The hatch cover apparatus is of a simple construction and it can be retrofitted to existing tank and hatch cover arrangements. This also significantly reduces the cost of the equipment. As the hatch cover is slidably arranged relative to the opening, and apart from the clamp members the various components have a height which is below the level of the cover lid, the overall height of the tank does not significantly increase.

Furthermore, it is possible to operate more hatches simultaneously by interconnecting the hatch covers and providing suitable extension members. The hatch lid cover is pivotally arranged for cleaning when required which allows the hatch to be opened in the conventional way.

According to another aspect of the invention, there is provided a hatch cover apparatus comprising a cover lid adapted to cover an opening formed by the body of a storage container, an expandable seal extending between the closed cover and the container body to thereby seal the opening, and means for moving the cover lid between an open position and a closed position, wherein the seal and the moving means are operated by a common activation source.

The supply lines for providing compressed air or fluid to the activating means are housed in a conduit to protect these. The conduit may comprise a chain enclosing the supply lines during operation of the apparatus. A bayonet land based air or hydraulics connection may be provided to allow the apparatus to be opened and closed in case of loss of trailer air or hydraulics. A sensor may be mounted in the hatch cup or seal to prevent the hatch from opening if the tank or storage container is pressurized. One or more air or water cleaning jets may be provided to clean the tank top after filling. This obviates the need for the operator to access the hatch cover. The jets may be mounted on the cover lid and may be directed towards the perimeter of the opening. The apparatus may comprise a tank for containing the cleaning fluid and a pump for supplying the cleaning fluid to the jet.

Alternatively, or in addition, the cover lid may comprise a scraping device in the form of a brush or blade. The scraping device may be provided on the cover lid such that the scraping device contacts the perimeter of the opening when the lid is closed to clean the perimeter. The scraping device may comprise a resilient material such as rubber or polyurethane.

In another embodiment of the invention, the cover lid may comprise a lid seal. The lid seal may comprise a suitable polymer for sealing the lid. The polymer may be selected such that the material properties of the polymer are unaffected by the contents of the container body.

The hatch cover apparatus of the invention may be fitted to both pressurised and non-pressurised containers. The hatch cover apparatus is preferably operated from a common supply which activates both the seal and the movement of the cover lid. The common supply may be a hydraulic or pneumatic or electric supply.

The hatch cover apparatus may further comprise an override device for overriding activation of the hatch cover apparatus by an operator. The override device may be in the form of an emergency stop button. The emergency stop button is preferably located on top of the container. The emergency stop button allows the operator to override operation of the hatch cover apparatus to prevent inadvertent operation of the apparatus. This can be useful, for example, during maintenance tasks such as cleaning. The override device may also be taken inside the container to prevent the hatch cover apparatus from accidentally being operated.

The invention will now be described for illustrative purposes only and with reference to the accompanying drawings in which:
Figure 1 presents a diagrammatic view of a hatch cover apparatus according to an embodiment of the invention, details of the various parts of the hatch cover apparatus of Figure 1 are shown in Figures 1 a-h;
Figure 2 presents a diagrammatic plan view of a hatch cover apparatus according to another embodiment of the invention;
Figure 3 presents diagrammatic views of a hatch cover apparatus according to yet another embodiment of the invention in which:
   Figure 3a shows the hatch cover apparatus in an open position,
   Figure 3b shows the apparatus in a closed position,
   Figure 3c shows a side view of the apparatus from one end,
   Figure 3d shows a side view of the apparatus from another end,
   Figure 3e shows a side view of the cover lid, and
   Figure 3f and 3g show a respective plan view and a side view of a guide bush.
Figure 4 presents diagrammatic views of a hatch cover cover apparatus according to a further embodiment of the invention in which :-
   Figures 4a shows the hatch cover apparatus in a closed position.
   Figure 4b shows the apparatus in an open position, and
   Figure 4c shows a side view of the apparatus; and
Figure 5 presents diagrammatic views of the hatch cover apparatus according to another embodiment of the invention in which :
   Figures 5a shows the hatch cover apparatus in a closed position,
   Figure 5b shows the apparatus in an open position, and
   Figure 5c shows a side view of the apparatus from one end.

The hatch cover apparatus 10 comprises a cover lid 12 which is adapted to cover an opening 14 formed by the body of a storage container (not shown).

The apparatus 10 comprises means for providing sliding movement of the cover lid 12 relative to the opening 14 between an open position and a closed position. An expandable seal 16 extends between the closed cover lid 12 and the container body, thereby sealing the opening 14. The apparatus further comprises an arrangement 20 for retaining the cover lid 12 in a closed position when the seal 16 seals the opening 14.

The retaining arrangement 20 comprises securing means for securing the cover lid 12 in a closed position. The securing means comprises a pair of first clamp members 22 which are mounted on the container body, the first clamp members 22 being adapted to engage with the cover lid 12 in a closed position.

The retaining arrangement further comprises guide members 24 in the form of guide rails and first engagement members 26 which engage with the guide rails 24. The guide members 24 and first engagement members 26 serve a dual purpose. They enable the lid 12 to be slidably arranged relative to the opening 14 and they also prevent the lid 12 from moving away from the opening, when the cover 12 is in the closed position and the expandable seal 16 extends between the closed cover 12 and the container body to seal the opening 14.

The securing means further comprise a pair of second clamp members 28 which are provided on the first engagement members for additionally clamping the cover 12 in the closed position. The first and second clamp members 22, 28 are removable to allow the cover lid 12 to be removed. The cover lid 12 is pivotally connected to the first engagement members 26. Thereto, the cover lid 12 has a pivot rod 30 which engages with recesses 32 which are provided in the first engagement members 26.

The apparatus 10 further comprises second engagement members 34 in the form of half bushes which further support the cover 12. The half bushes 34 do not serve to retain the cover lid 12 in the closed position as they only partially engage with the guide member 24 and merely rest on the guide rails 24.

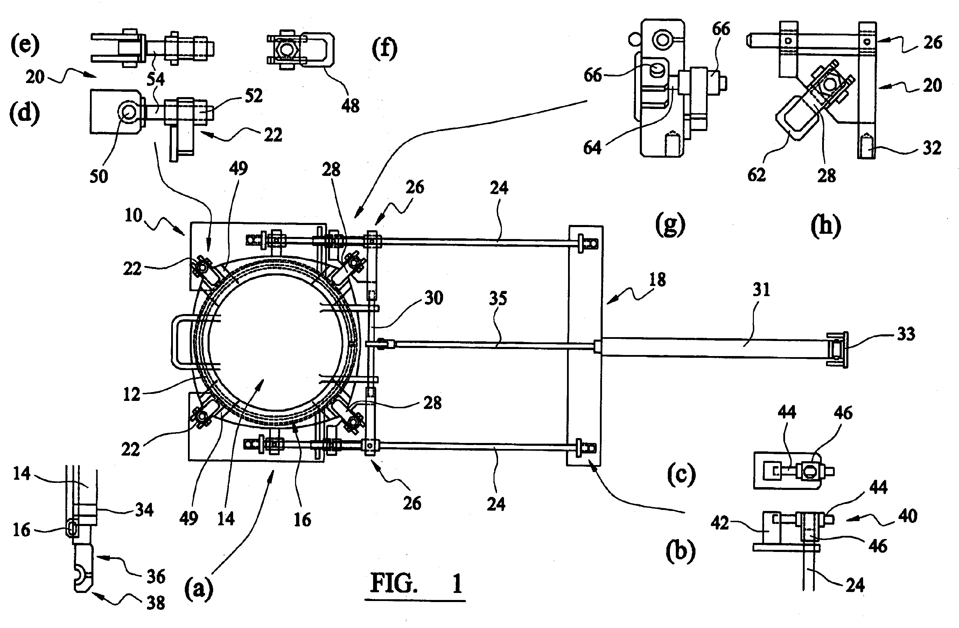

Details of the guide bushes 34 are presented in Figure 1a. The guide bush is connected on one end 36 to the cover 12 to support the cover lid 12 whilst the other end 38 engages with the guide member 24 to provide support to the cover lid 12 whilst this is slid sideways to open and close the opening 14.

Figures 1b and 1c show an enlarged view of the side of the guide mounting 40 in both a side and a rear view. As shown in Figure 1, the guide mounting 14 is connected to the tank (not shown) via a base 42 which is welded to the tank body structure. The mounting 40 further comprises an upright 44 with a support mounting 46 for supporting the guide member 24.

Details of the first clamp members are shown in Figures 1d to 1f which show a side view (1d), a rear (1e) and an enlarged plan view (1f) of the first clamp members 22. The clamp member 22 further comprises a clamp surface 48 which can engage with the tap or ear 49 of the cover 12. The first clamp member 22 is pivotally arranged around pivot pin 50 to allow the cover to fully engage the clamp surface 48. The height of the clamp surface 48 is adjustable by a nut 52 which engages the clamp upright 54 so as to accommodate a wide variety of cover and seal arrangements which may vary for different applications. The nut 52 may be removable to allow removal of the clamp member 22. This facilitates removal or manual opening of the cover lid 12.

Details of the second clamp members and guide engagement member 26 are shown in Figures 1g and 1h. A side view of the second clamp member 28 is shown is Figure 1g and a plan view is presented in Figure 1h. Similar to the first clamp member 22, the second clamp member 20 comprises a clamp surface 62 and the clamp member 28 is provided on a second clamp upright 64 which is pivotally mounted on a pivot 66. The upright 64 comprises a screw thread for receiving a nut 66 which again may be removed to allow removal of the second member 28.

The overall structure of the hatch cover apparatus 10 is such that it can be retrofitted to an existing cover arrangement. The hatch cover lid 12 may be an existing hatch cover.

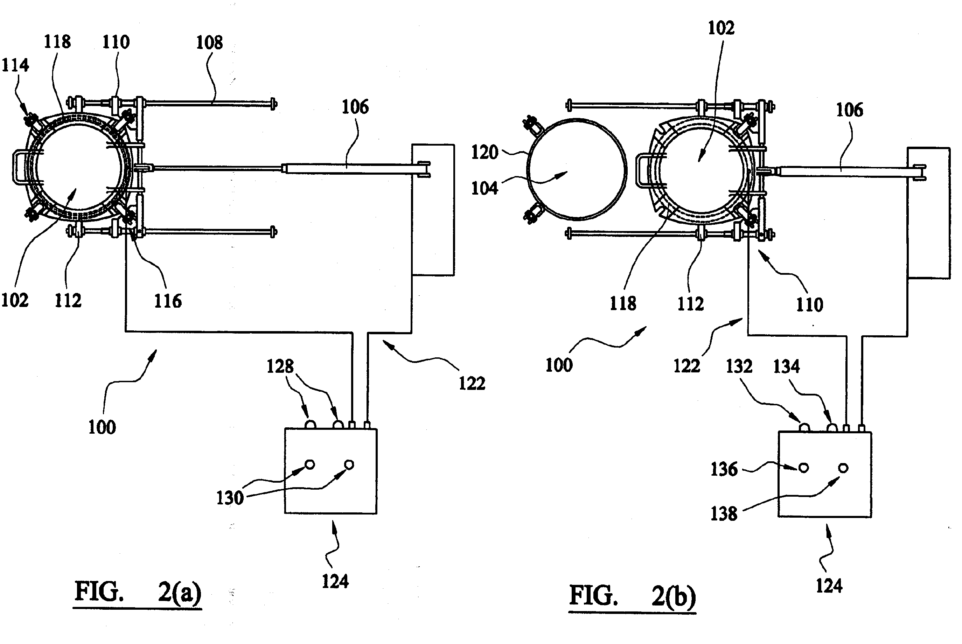

In use, the hatch cover apparatus 10 is operated as follows. To open the tank or storage facility, the seal 16 is deflated thereby releasing the cover 12 from its contact with the clamp members. The pneumatic cylinder 31 is activated to retract the cylinder arm 35 which slides the cover along the guide rails 24 to uncover the opening. To close the opening, the pneumatic cylinder 31 is activated. This in turn extracts the arm 35 thereby moving the cover lid 12 over the opening into a closed position. The seal 16 is then inflated to seal the opening between the cover 12 and the tank thereby bringing the cover 12 in contact with the clamp members to seal the opening 14. The hatch cover apparatus 10 is controlled by a control system which is described in more detail with reference to Figure 2 below.

In Figure 2a and 2b, the hatch cover apparatus 100 is shown with the cover in a closed position (Fig. 2a) and an open position (Figure 2b). Similar to Figure 1, the hatch cover apparatus 100 comprises a cover lid 102, and an opening 104 provided in a tank or storage container (not shown). The opening 104 is surrounded by a neck ring 120.

The apparatus 100 further comprises a pneumatic cylinder 106 for operating the cover lid 102 to slide along guide rails 108. The cover apparatus 100 comprises guide members in the form of guide bushes 110 and half guide bushes 112 to allow the cover 102 to slide along the guide rails 108.

The apparatus 100 further comprises first clamp members 114 that are fixed to the tank and second clamp members 116 that are provided on the guide bushes 110. Finally, the apparatus 100 comprises an inflatable seal 118 which is provided in the lid 102 in a location which corresponds to the area of the cover lid 102 which engages with the neck ring 120 of the tank.

The apparatus 100 further comprises air lines for operating the seal and a pneumatic cylinder and a control system which is shown schematically for controlling and operating the hatch cover apparatus 100. A mechanical air interlock can be fitted into the air line close to the seal and cylinder to prevent air from being lost either from the seal or cylinder in the event of a leak from the air supply line. The control system 124 comprises a display in the form of lights which show the status of the cover in relation to the opening and push buttons 130 for operating the control system. The display lights 128 comprise a green light 132 to indicate that the hatch is closed and a red light 134 to indicate that the hatch is open.

The hatch cover apparatus is operated as follows. With the hatch 100 closed and the seal inflated, the green light is on to indicate that the hatch cover lid is closed. By pressing button 136, the seal 118 is deflated and pneumatic cylinder 106 is activated by the air supply to open the cover lid 102.

When the cover lid 102 is in the position as shown in Figure 2b with the opening 104 uncovered, the red light 134 is on to indicate this position. The button 138 may then be pushed to close the opening 104. The pneumatic cylinder 106 is then activated to close the opening 104 and the seal 118 is inflated when the cover lid 102 is in the closed position. This pushes the cover lid 102 onto the clamp members 114 and 116 to thereby adequately seal the opening 104. When the seal is fully inflated, the green light 132 indicates that the hatch cover lid 102 is again in the closed position and that the opening 104 is securely sealed.

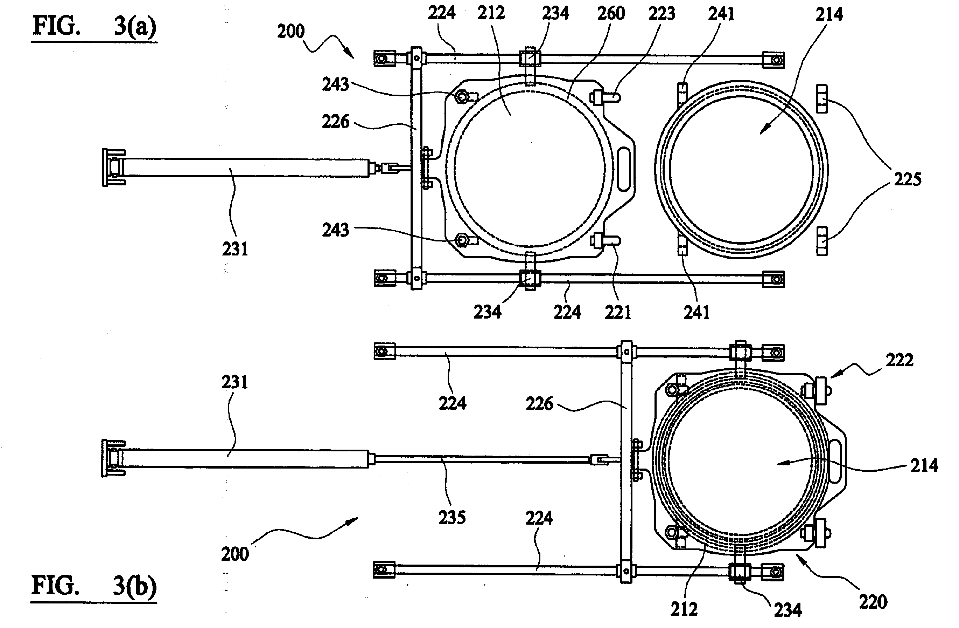

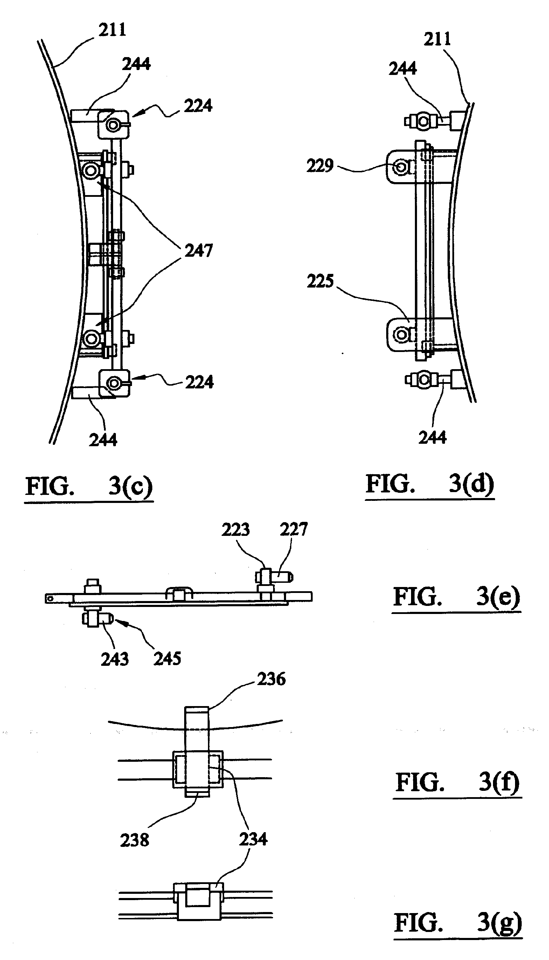

An alternative hatch cover apparatus 200 is shown in Figure 3 in an open position (Figure 3a) and a closed position (Figure 3b). The apparatus 200 comprises a cover lid 212 which is adapted to cover an opening 214 formed by the body of a storage container 211. The apparatus 200 again comprises means for providing sliding movement of the cover lid 212 relative to the opening 214 between the open position and closed positions. An expandable seal 260 is located on the cover lid 212. The apparatus 200 further comprises an arrangement 220 for retaining the cover lid 212 in a closed position when the seal 260 seals the opening 214.

The retaining arrangement 220 comprises first securing means in the form of a pair of first securing members 225 mounted on the container body and a pair of second securing members 223 provided on the cover lid, the first securing members 225 engaging with the second securing members 223. The second securing members 223 comprise a protrusion or lug 227 and the first securing member 225 comprises a locating aperture 229 for receiving the protrusion 227.

The retaining arrangement 220 further comprises second securing means in the form of a pair of third securing members 241 mounted on the container body and a pair of fourth securing members 243 provided on the cover lid 212, the third securing members 241 engaging with the fourth securing members 243. The fourth securing members 243 comprise a protrusion and the third securing members 241 comprises a locating aperture 247 for receiving the protrusion.

The retaining arrangement further comprises a guide member 224 in the form of a pair of guide rails. Guide engagement member 226 engages with the guide rails 224. The cover lid 212 is pivotally connected to the guide engagement member 226.

The second and fourth securing members 223, 243 are removable for maintenance or cleaning purposes and to allow the cover lid 12 to be opened conventionally or to be removed.

The apparatus 200 further comprises second guide engagement members 234 in the form of guide bushes which further support the cover 212. The guide bushes 234 are removably connected to the cover lid 212. Details of the guide bushes 234 are presented in Figure 3f and 3g. The guide bushes are connected on one end 236 to the cover 212 to support the cover lid 212 whilst the other end 238 engages with the guide member 224 to provide support to the cover lid 212 whilst this is slid sideways to open and close the opening 214.

Figure 3c and 3d show side views of the hatch cover apparatus from both ends of the apparatus 200. The guide rails 224 are mounted to the tanks with uprights 244 which support the guide member 224. As is clear from Figures 1c and 1d, the overall height of the tank is only marginally increased by the hatch cover apparatus 200 in comparison with a conventional cover lid.

Details of the securing members 223,243 are shown in Figure 3e. The securing members 223,243 comprise protrusions or lugs 245,227 which are of a suitable diameter to retain the cover lid 212 in the closed position. For pressurised storage containers, the forces on the protrusions are considerable.

The apparatus 200 comprises an extension member 231 for operating the cover lid 212, so that the cover lid 212 slides between a closed position and an open position.

In use, the hatch cover apparatus 200 is operated in a similar way as the apparatus 10,100. To open the tank or storage facility, the seal 260 is deflated, and the pneumatic cylinder 231 is activated to retract the cylinder arm 235 which slides the cover 212 along the guide rails 224 to uncover the opening 214. To close the opening 214, the pneumatic cylinder 231 is activated. This in turn extracts the arm 235 thereby moving the cover lid 212 over the opening 214 into a closed position whereby the lugs 245, 227 engage with their corresponding locating holes in the securing members 225,241. The seal 216 is then inflated to seal the opening between the cover 212 and the tank whereby the securing means secure the lid 212 and retain the lid 212 in the closed position.

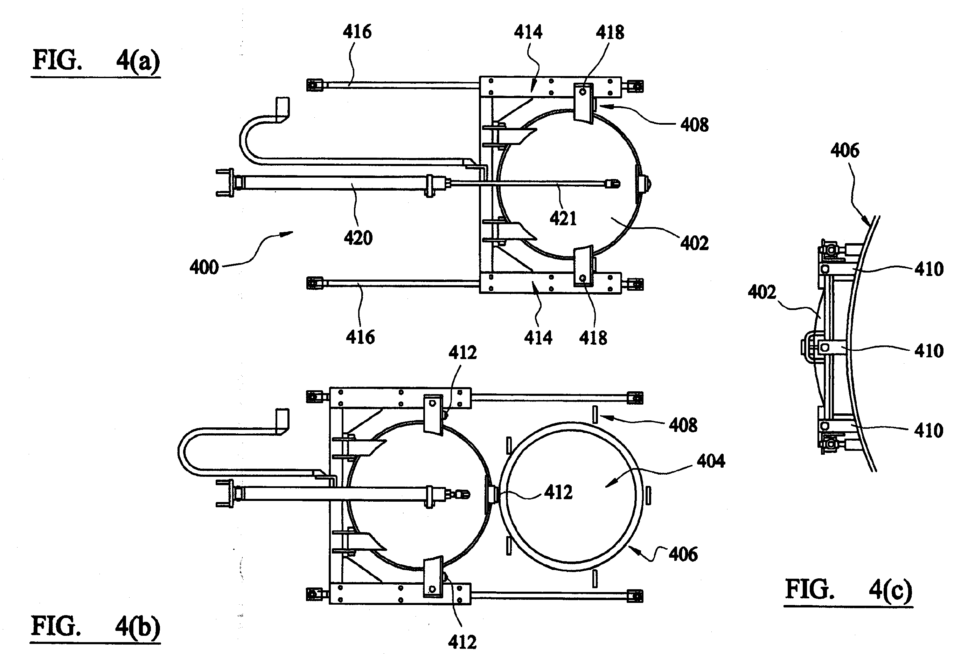

Another hatch cover apparatus 400 is shown in Figure 4 in a closed position (Figure 4a) and an open position (Figure 4b). The apparatus 400 comprises a cover lid 402 which is adapted to cover an opening 404 formed by the body of the storage container 406. The apparatus 400 again comprises means for sliding the cover lid 402 relative to the opening 404 between the open and closed positions. An expandable seal (not shown) is located on the cover lid 402. The apparatus 400 further comprises an arrangement 408 for retaining the cover lid 402 in a closed position when the seal engages and seals the cover lid 402 in the closed position.

Similar to Figure 3, the retaining arrangement 408 comprises pins or lugs 412 which are fixed to the cover lid 402 and which engage with apertures in receiving members 410 which are mounted on the container 406. When the cover lid 402 is in the closed position as shown in Figure 4a, the pins 412 of the lid 402 engage with the receiving members 410 to secure the lid 402 in place upon activation of the seal.

Similar to Figure 3, the cover lid is connected to a frame 414 which is slidably arranged on a pair of guide rails 416. The cover lid is pivotally connected to the frame 414 by means of hinges 417. The lid is further connected to the frame by means of supports 418 to allow conventional, pivoting of the cover lid 402 upon disengaging the lid 402 from the supports 418. This may be desirable in case of a faulty operation of the apparatus 400 or for maintenance or inspection purposes.

The apparatus 400 is powered by an extendible pneumatic cylinder 420 which can extract and extend its arm 421 thereby opening and closing the cover lid 402. The air supply is located in a cable guide or chain to protect the air supply from becoming trapped between the cover lid 402 and other parts of the apparatus 400.

In use, the hatch cover apparatus 400 is operated in a similar way to the apparatus as shown in the preceding Figures. To open the container, the seal is deflated and the pneumatic cylinder 420 is activated to retract the cylinder arm 421 which slides the cover 402 along the guide rails 416 to uncover the opening 404. To close the opening 404, the pneumatic cylinder 420 is activated. This in turn extracts the arm 421, thereby moving the cover lid 402 over the opening 404 into a closed position whereby the pins or lugs 412 engage with the receiving members 410 to secure the lid 402. The seal is then inflated to seal the opening between the cover lid 402 and the container whereby the retaining arrangement 408 secures the lid 402 and retains the lid 402 in the closed position.

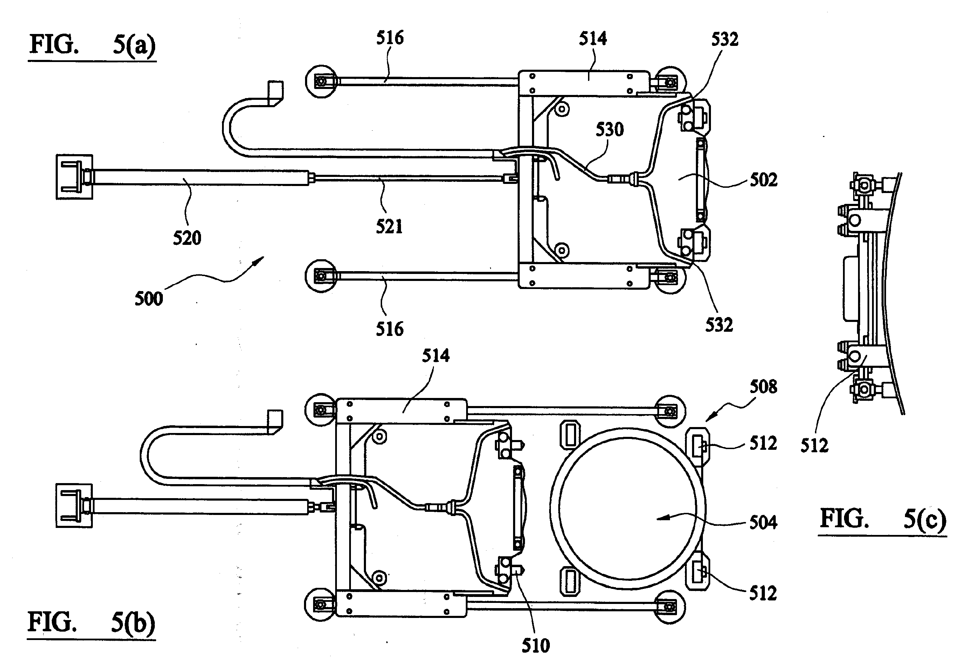

Another apparatus is shown in Figure 5. This apparatus 500 is very similar in configuration and operation to the apparatus as shown in Figures 3 and 4. The apparatus 500 comprises a cover lid 502 for covering an opening 504. The apparatus 500 further comprises a retaining arrangement 508 comprising lugs 510 and receiving members 512 similar to Figure 4. The cover lid 502 is again mounted in a frame 514 which is slidably arranged on guide rails 516. The cover lid 502 is hingedly connected to the frame 514 to allow conventional, hinged access to the opening 504.

The apparatus 500 further comprises an air supply 530 comprising nozzles 532 which are directed towards the perimeter of the opening 504 to clear this opening 504 of deposits. This ensures that the opening 504 is always clean thereby preventing inadequate sealing of the lid 502 in relation to the opening 504.

The apparatus 500 is operated in a similar fashion as the apparatus as shown in Figures 3 and 4. During closing of the cover lid 502, air is applied to the perimeter of the opening by nozzles 532 to clean the opening perimeter to ensure adequate sealing of the opening 504.

It is evident that the hatch cover apparatus 10, 100, 200, 400, 500 as herein before described has applications in a wide variety of fields including cover apparatus for fixed and mobile storage tanks such as silos, tanks and other storage facilities, including covers for marine applications such as shipping and storage of goods.

## Claims

1. An automatic hatch cover apparatus (400) for a storage container (406) comprising:
a cover lid (402) adapted to cover an opening (404) formed by the body of a storage container (406),
an arrangement for sliding the cover lid (402) relative to the opening (406) between an open position and a closed position,
an arrangement (408) for retaining the cover lid in a closed position,
sealing means extending between the closed cover (402) and the container body (406) to thereby seal off the opening (404),
**characterised by**
the sealing means being activatable in a sealing condition to seal off the opening (404) whereby the arrangement (408) retains the cover lid (402) in a closed position, and a non-sealing condition whereby the cover lid (402) is slidable between the open position and the closed position to uncover and cover the opening (404).

2. An apparatus (400) according to claim 1, **characterised by** the sealing means comprising an expandable seal.

3. An apparatus (400) according to claim 1 or 2, **characterised by** the sealing means comprising an internal pressure inside the container (406) causing sealing off of the opening (404).

4. An apparatus (400) according to any of the preceding claims, **characterised by** the retaining arrangement (408) comprising at least one guide member (416) mounted on the container body (406), the retaining arrangement (408) further comprising a frame (414) for engaging with the guide member (416), the cover (404) being connected to the frame (414).

5. An apparatus (400) according to claim 4, **characterised by** the cover lid (402) being pivotally connected to the frame (414).

6. An apparatus (400) according to any of the preceding claims, **characterised by** the sliding arrangement comprising an extension member (420), the extension member (420) being extendable between a retracted position corresponding to the open position of the cover lid (402) and an extended position corresponding the cover lid (402) being in a closed position.

7. An apparatus (400) according to claim 6, **characterised by** the extension member (420) being connected to the frame (414) and the container body (406).

8. An apparatus according to claim 6 or 7, **characterised by** the extension member (420) being connected to the cover lid (402) and the container body (406).

9. An apparatus (400) according to any of the preceding claims, **characterised by** the retaining arrangement (408) comprising first and second securing means for securing the cover in a closed position, the first securing means comprising at least one first securing member (410) mounted on the container body (406) and at least one second securing member (412) provided on the cover lid (402), the first securing member (410) engaging with the second securing member (412).

10. An apparatus (400) according to any of the preceding claims, **characterised by** the apparatus (400) being mountable to an existing container (406) and cover lid (402) ensemble.

11. An apparatus (400) according to any of the preceding claims, **characterised by** the apparatus (400) comprising means for activating the sealing means and the sliding arrangement, the activation means comprising a common activation source.

12. A method of operating an automatic hatch cover apparatus (400) comprising:
providing a cover lid (402) adapted to cover an opening (404) formed by the body (406) of a storage container,
providing an arrangement for sliding the cover lid (402) relative to the opening (404) between an open position and a closed position,
providing an arrangement (408) for retaining the cover lid in a closed position,
providing sealing means extending between the closed cover (402) and the container body (406) to thereby seal off the opening,
**characterised by**
the sealing means being activatable in a sealing condition to seal off the opening (404) whereby the cover lid (402) is retained in a closed position, and a non-sealing condition whereby the cover lid (402) is slidable between the open position and the closed position to uncover and cover the opening (404),
the method further comprising;
to close the opening (404):
sliding the cover over the opening (404) followed by sealing off the opening (404), and;
to open the opening (404):
unsealing the opening (404) followed by sliding the cover (402) away from the opening (404).
